# EUROPEAN PATENT APPLICATION

(11) **EP 2 293 248 A1**
(43) Date of publication of application: **09.03.2011**
(21) Application number: 09169698.9
(22) Date of filing: 08.09.2009
(51) Int. Cl.: G06T 7/20

(54) **Motion monitoring system for monitoring motion within a region of interest**

(71) Applicant: Koninklijke Philips Electronics N.V., 5621 BA Eindhoven (NL); Philips Intellectual Property & Standards, 20099 Hamburg (DE)
(72) Inventor: The designation of the inventor has not yet been filed
(74) Representative: Damen, Daniel Martijn

(57) **Abstract**

The invention relates to a motion monitoring system (1) for monitoring motion within a region of interest (2). The motion monitoring system (1) comprises a magnetic induction tomography detection data acquisition unit (3) for acquiring MIT detection data of the region of interest (2), and a motion determining unit (4) for determining motion within the region of interest (2) based on the acquired MIT detection data. The invention relates further to an imaging system for imaging a region of interest comprising the motion monitoring system (1). The determined motion can be used for reducing motion artifacts in reconstructed images.

## Description

### FIELD OF THE INVENTION

The invention relates to a motion monitoring system, method and computer program for monitoring motion within a region of interest. The invention relates further to an imaging system, an imaging method and an imaging computer program for imaging the region of interest.

### BACKGROUND OF THE INVENTION

The article "Motion in cardiovascular MR imaging", Scott A.D., Keegan J., Firmin D.N., Radiology. 2009 Feb, 250(2):331-51 discloses a magnetic resonance (MR) imaging system for generating a MR image of the human heart. MR detection data are acquired, and in parallel an electrocardiogram is measured for determining different cardiac phases. The MR image is reconstructed using MR detection data which have been acquired while the heart is in the same cardiac phase. This consideration of the cardiac phase while reconstructing the MR image reduces motion artifacts in the reconstructed MR image.

Before the acquisition of the MR detection data the patient has to be provided with electrodes for measuring the electrocardiogram. After the MR detection data have been acquired, the electrodes have to be removed from the patient. This providing and removing of electrodes is time consuming and can be uncomfortable for a patient.

### SUMMARY OF THE INVENTION

It is an object of the present invention to provide a motion monitoring system, method and computer program for monitoring motion within a region of interest, which is allows detecting motion within a region of interest without contacting an object to be imaged, wherein the detected motion can be used for reducing motion artifacts in an image of the region of interest. It is a further object of the present invention to provide a corresponding imaging system, imaging method and imaging computer program for imaging the region of interest.

In a first aspect of the present invention a motion monitoring system for monitoring motion within a region of interest is presented, wherein the motion monitoring system comprises:
- a magnetic induction tomography (MIT) detection data acquisition unit for acquiring MIT detection data of the region of interest,
- a motion determining unit for determining motion within the region of interest based on the acquired MIT detection data.

A MIT detection data acquisition unit allows acquiring MIT detection data noninvasively and contactlessly. Alternating magnetic fields are applied to the region of interest, wherein changes of the complex conductivity in the region of interest cause a field perturbation due to the induction of eddy currents and magnetic dipoles in the region of interest. The perturbation induces voltage changes in electrical receiving elements of the MIT detection data acquisition unit, wherein the MIT detection data are generated based on the induced voltages changes. The MIT detection data provide therefore information about the conductivity and also about the permittivity and permeability distribution in the region of interest. If motion is present in the region of interest, also the distribution of conductivity, permittivity and permeability moves in the region of interest. The MIT detection data include therefore information about the motion in the region of interest. This motion information is extracted from the MIT detection data by the motion determining unit. The monitored motion, i.e. the extracted motion information, can be used for reducing motion artifacts in images of the region of interest generated by a MIT imaging modality or another modality like a MR imaging system or a nuclear imaging system, for example, a positron emission tomography (PET) imaging system or a single photon emission computed tomography (SPECT) system.

The MIT detection data acquisition unit can relatively easily be integrated in many other imaging modalities like MR, PET or SPECT imaging modalities, i.e. existing imaging modalities can easily be modified to integrate the motion monitoring system which uses the MIT detection data acquisition unit.

The monitored motion does not have to be used for reducing motion artifacts of an image of the region of interest. The motion monitoring system can also be adapted to just provide the determined motion within a region of interest to a user or to an apparatus not being an imaging unit.

The MIT detection data acquisition unit preferentially comprises transmitting coils for applying alternating magnetic fields to the region of interest and receiving coils being the electrical receiving elements for receiving MIT signals from the region of interest by measuring voltage changes in the receiving coils induced by field perturbations in the region of interest. The MIT detection data are preferentially generated based on the voltage changes.

The motion determining unit can be adapted to determine the motion within the region of interest directly based on the acquired MIT detection data or indirectly based on the acquired MIT detection data, wherein the MIT detection data are processed for generating intermediate data used for determining the motion within the region of interest. The intermediate data are, for example, MIT images reconstructed based on the MIT detection data.

It is further preferred that the motion determining unit comprises a MIT reconstruction unit for reconstructing a temporal MIT image of the region of interest from the acquired MIT detection data, wherein the motion determining unit is adapted to determine a tracking feature in the temporal MIT image and to determine the motion within the region of interest based on the determined tracking feature in the temporal MIT image.

The temporal MIT image preferentially comprises a time series of MIT images of the region of interest.

The tracking feature is preferentially a landmark of maximum impedance contrast in the temporal MIT image. If the motion to be monitored is caused by breathing of a human being or an animal, the tracking feature is preferentially the diaphragm. The tracking feature can also be the cardiac ventricle or ventricular blood volume, if the motion to be monitored is caused by cardiac motion. The tracking feature can also be a contrast agent, which has preferentially be administered orally to the person and which has a conductivity and/or permittivity being higher or lower than the average conductivity and/or average permittivity, respectively, of the object to be imaged. The average conductivity and/or average permittivity are generally known. For example, the heart has an average conductivity of about 0.7 Siemens/m and the lung has an average conductivity of 0.3 to 0.5 Siemens/m. The contrast agent has preferentially a conductivity below 0.1 Siemens/m or above 2.0 Siemens/m. The heart has an average permittivity of about 100 and the lung has an average permittivity between 35 and 80. The contrast agent can have a permittivity below 20. For example, oil or water could be used as contrast agent. Preferentially, the contrast agent has a conductivity and/or permittivity below 50 % or above 200 % of the average conductivity and/or average permittivity, respectively, of the object to be monitored. Preferentially, the size, the shape, the position and/or the orientation of the tracking feature is detected in the temporal image for determining the motion of the object. In particular, the intestinal/gastric shape and/or position can be tracked, or the shape and/or size of the heart, in particular, the shape of the cardiac ventricle or the size of the ventricle blood volume.

Preferentially, the MIT detection data acquisition unit is adapted to perform a sequential procedure, wherein different measurements are performed using different transmitting coils, which are arranged around the region of interest, one after the other. The reconstruction unit can be adapted to reconstruct a MIT image after one cycle of using the transmitting coils has been completed, i.e. cycle after cycle can be performed, wherein after each completion of a cycle the MIT detection data of the just completed cycle are used for reconstructing an actual MIT image. The sequence, in which the transmitting coils are addressed for performing the measurements of a cycle, can correspond to the arrangement of the transmitting coils, i.e. after a first transmitting coil has been addressed a neighboured transmitting coil is addressed as second transmitting coil et cetera. However, also other sequences can be used. For example, the sequence can be given by the golden cut. The MIT images reconstructed for different cycles form the time series of MIT images, i.e. the temporal MIT image. However, it is preferred that the MIT reconstruction unit is adapted to use sliding window techniques for reconstructing the temporal image of the region of interest. From the last acquired MIT detection data as much MIT detection data are used for reconstruction an actual MIT image as needed for reconstructing this image with the desired quality, i.e., for example, with the desired spatial resolution. This allows reconstructing the MIT images online during a cycle, i.e. before a cycle has been completed, and increases the temporal resolution of the temporal image and, thus, of the monitored motion.

The motion monitoring system can comprise a motion model providing unit for providing a motion model of an object to be reconstructed which is preferentially present in the region of interest. The motion determining unit is preferentially configured to adapt the motion model to the temporal MIT image. For example, the motion model is preferentially modified such that deviations of the motion model from the motion of the object comprised by the temporal MIT image are minimized. The adapted motion model can be regarded as the determined motion within the region of interest.

It is further preferred that the motion monitoring system comprises a motion correction unit for correcting motion artifacts in an image of the region of interest based on the determined motion.

The motion correction unit is preferentially adapted to correct for respiratory motion artifacts, gastrointestinal motion artifacts, cardiac motion artifacts, and/or motion artifacts caused by unintentional patient movements.

In a further aspect of the present invention an imaging system for imaging a region of interest is presented, wherein the imaging system comprises:
- a motion monitoring system as defined in claim 1,
- an imaging unit for generating an image of the region of interest,
- a motion correction unit for correcting motion artifacts in the generated image of the region of interest based on the determined motion.

It is preferred that the imaging unit comprises a detection data acquisition unit for acquiring detection data being indicative of a property within the region of interest, wherein the motion correction unit is adapted to reconstruct the image from the acquired detection data and to correct motion artifacts while reconstructing the image. Thus, the motion correction unit and the imaging unit can be integrated, wherein the motion correction unit receives the monitored motion and considers the received motion while reconstructing the image. This can allow for a compact imaging system comprising the motion correction unit. In another embodiment, the imaging unit can comprise a reconstruction unit for reconstructing an image of the region of interest from the acquired detection data, and the motion correction unit can be adapted to correct the reconstructed image based on the determined motion.

The imaging unit is preferentially a magnetic resonance imaging unit.

In other embodiments, the imaging unit can also be another imaging modality like a nuclear imaging unit, for example, a PET imaging unit or a SPECT imaging unit, an X-ray imaging unit, for example, an X-ray computed tomography imaging unit or an X-ray C-arm imaging unit, an ultrasound imaging unit et cetera.

In an embodiment, the MIT detection data acquisition unit comprises MIT transmitting coils for inducing eddy currents in the region of interest and MIT receiving coils, in which electrical signals, which depend on the induced eddy currents, are inducable, for acquiring the MIT detection data, wherein the imaging unit comprises MR transmitting coils and MR receiving coils and wherein the MIT transmitting coils and the MIT receiving coils are separated from the MR transmitting coils and the MR receiving coils.

The approach to use separate MR coils and MIT coils has the advantage that a frequency can be chosen which (a) is optimal for decoupling MR and MIT coils and (b) yields optimal MIT image contrast, i.e., a frequency, which is significantly lower than typical Larmor frequencies.

The MIT detection data acquisition unit and the imaging unit are preferentially integrated. This allows providing a compact imaging system comprising the motion monitoring system. Moreover, this can allow for a relatively easy modification of an exisiting imaging unit, in order to integrate the motion monitoring system into the existing imaging unit.

Integration means preferentially that at least some elements of the MIT detection data acquisition unit and the imaging unit are identical. In particular, the transmitting coils of the MR imaging unit can be used as the transmitting coils of the MIT detection data acquistion unit. Moreover, the MIT imaging unit and the second imaging unit can use the same signal detection channels.

The imaging system comprises preferentially a second imaging unit for generating a second image of the region of interest.

For example, the imaging system is an in-line hybrid imaging system like a PET-MR imaging system, a nuclear-MR imaging system, an X-ray-MR imaging system et cetera, combined with the motion monitoring system with the MIT detection data acquisition unit.

It is further preferred that the second imaging unit comprises a second detection data acquisition unit for acquiring second detection data being indicative of a property within the region of interest, wherein the motion correction unit is adapted to reconstruct the second image from the second detection data and to correct motion artifacts while reconstructing the second image.

The term "second" is used only to express that the second detection data acquisition unit and the acquired second detection data belong to the second imaging unit.

The motion monitoring system preferentially comprises a first MIT detection data acquisition unit for acquiring first MIT detection data assigned to the imaging unit and a second MIT detection data acquisition unit for acquiring second MIT detection data assigned to the second imaging unit, wherein the motion determining unit is preferentially adapted to determine the motion within the imaging unit, which can be regarded as a first imaging unit, based on the acquired first MIT detection data and the motion within the second imaging unit based on the acquired second MIT detection data.

The first MIT detection data acquisition unit and the second MIT detection data acquisition unit can be adapted to have the same structure.

The second MIT detection data acquisition unit preferentially comprises a MIT acquisition ring for acquiring MIT detection data, wherein the second detection data acquisition unit includes a second acquisition ring for acquiring second detection data, wherein the MIT acquisition ring is arranged inside or outside of the second acquisition ring.

For example, if the second imaging unit is a PET or SPECT imaging unit, the second detection data acquisition unit of the PET or SPECT imaging unit can include a PET or SPECT acquisition ring for acquiring second detection data, wherein the MIT acquisition ring is arranged inside or outside of the PET or SPECT acquisition ring.

It is further preferred that the imaging system comprises an aligning unit for aligning the image, which can be regarded as a first image, and the second image with respect to each other based on the first acquired MIT detection data and the second acquired MIT detection data.

The MIT reconstruction unit can be adapted to reconstruct a first MIT image from the first MIT detection data and a second MIT image from the second MIT detection data. The aligning unit can be adapted to determine a first spatial relationship between the first image and the first MIT image, for example, based on a known relationship between an acquisition geometry defined by the detection data acquisition unit of the first imaging unit and a first MIT acquisition geometry defined by the first MIT detection data acquisition unit, and to determine a second spatial relationship between the second image and the second MIT image, for example, based on a known relationship between the acquisition geometry defined by the second detection data acquisition unit of the second imaging unit and a second MIT acquisition geometry defined by the second MIT detection data acquisition unit. The aligning unit is preferentially adapted to align the first MIT image and the second MIT image with respect to each other by detecting similar features in the first MIT image and in the second MIT image and to align the first image and the second image with respect to each other by using the aligned first and second MIT images and the determined first and second spatial relationships.

The imaging system can comprise an overlay unit for generating an overlay image by overlaying the aligned first image and second image. The imaging system preferentially further comprises a display unit for displaying at least one of the images, the first image, the first MIT image, the second image, the second MIT image, and the overlay image.

In an embodiment, the motion determination unit is configured to adapt a motion model with respect to a first temporal MIT image reconstructed from the first MIT detection data. The aligning unit is then adapted to align the first temporal MIT image and a second temporal MIT image, which is reconstructed from the second MIT detection data, with respect to each other for aligning the adapted motion model with the second MIT image. The reconstruction unit is then preferentially adapted to reconstruct the second image from the second detection data based on the aligned adapted motion model and the spatial relationship between the second MIT image, i.e. the aligned adapted motion model, and the second image to be reconstructed. This allows using the motion model adapted by using the first temporal MIT image for reconstructing the second image.

In a further aspect of the present invention a motion monitoring method for monitoring motion within a region of interest is provided, wherein the motion monitoring method comprises following steps:
- acquiring MIT detection data of the region of interest by a MIT detection data acquisition unit,
- determining motion within the region of interest based on the acquired MIT detection data by a motion determining unit.

In a further aspect of the present invention an imaging method for imaging a region of interest is provided, the imaging method comprising following steps:
- monitoring motion within the region of interest as defined in claim 1,
- generating an image of the region of interest by an imaging unit, wherein motion artifacts in the generated image of the region of interest are corrected based on the determined motion by a motion correction unit.

In a further aspect of the present invention a motion monitoring computer program for monitoring motion within a region of interest is provided, wherein the motion monitoring computer program comprises program code means for causing a motion monitoring system as defined in claim 1 to carry out the steps of the motion monitoring method as defined in claim 11, when the computer program is run on a computer controlling the motion monitoring system.

In a further aspect of the present invention an imaging computer program for imaging a region of interest is provided, wherein the imaging computer program comprises program code means for causing an imaging system as defined in claim 4 to carry out the steps of the imaging method as defined in claim 12, when the computer program is run on a computer controlling the imaging system.

It shall be understood that the motion monitoring system of claim 1, the imaging system of claim 4, the motion monitoring method of claim 11, the imaging method of claim 12, the motion monitoring computer program of claim 13 and the imaging computer program of claim 14 have similar and/or identical preferred embodiments as defined in the dependent claims.

It shall be understood that a preferred embodiment of the invention can also be any combination of the dependent claims with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematically and exemplarily a representation of a motion monitoring system for monitoring motion in a region of interest,
Fig. 2 shows schematically and exemplarily a representation of an imaging system for imaging a region of interest comprising a MR imaging unit and a motion monitoring system for monitoring a motion within the region of interest,
Figs. 3 to 5 show schematically and exemplarily representations of imaging systems for imaging a region of interest comprising a PET imaging unit and a motion monitoring system for monitoring a motion within the region of interest,
Fig. 6 shows schematically and exemplarily a representation of an in-line hybrid MR-PET imaging system comprising a motion monitoring system for monitoring a motion within the region of interest,
Fig. 7 shows exemplarily a flowchart illustrating an embodiment of a motion monitoring method for monitoring motion in a region of interest,
Fig. 8 shows exemplarily a flowchart illustrating an embodiment of an imaging method for imaging a region of interest.

### DETAILED DESCRIPTION OF EMBODIMENTS

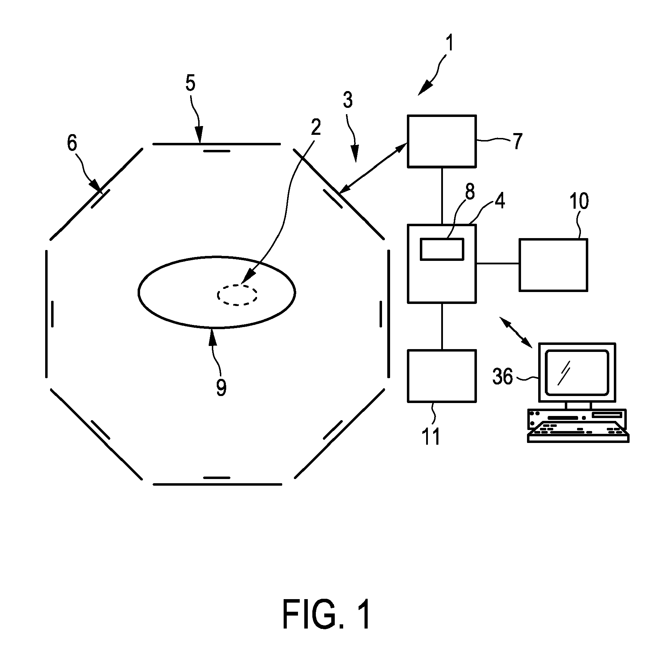

Fig. 1 shows schematically and exemplarily an embodiment of a motion monitoring system 1 for monitoring motion within a region of interest 2. The motion monitoring system 1 comprises a MIT detection data acquisition unit 3 for acquiring MIT detection data of the region of interest 2 and a motion determining unit 4 for determining motion within the region of interest 2 based on the acquired MIT detection data.

MIT detection data acquisition unit 3 comprises MIT transmitting coils 5 for applying alternating magnetic fields to the region of interest 2 and MIT receiving coils 6 for receiving MIT signals from the region of interest 2 by measuring voltage changes in the receiving coils 6 induced by field perturbations in the region of interest 2. The MIT transmitting coils 5 and the MIT receiving coils 6 are controlled by a MIT detection data generation unit 7 which generates MIT detection data based on the voltage changes in the MIT receiving coils 6.

The MIT transmitting coils 5 and the MIT receiving coils 6 surround the region of interest 2 and are preferred controlled such that the transmitting coils 5 are activated one after another, wherein, if a MIT transmitting coil 5 is activated, the MIT receiving coils 6 receive the MIT signals from the region of interest 2. In other embodiments, the MIT transmitting coils 5 and the MIT receiving coils 6 can be operated in another way.

The MIT detection data include information about the motion in the region of interest 2. This motion information is extracted from the MIT detection data by the motion determining unit 4.

The motion determining unit 4 can be adapted to determine the motion within the region of interest directly based on the acquired MIT detection data or indirectly based on the acquired MIT detection data, wherein the MIT detection data are processed for generating intermediate data used for determining the motion within the region of interest.

In this embodiment, the motion determining unit 4 comprises a MIT reconstruction unit 8 for reconstructing a temporal MIT image of the region of interest 2 from the acquired MIT detection data, wherein the motion determining unit 4 is adapted to determine a tracking feature in the temporal MIT image and to determine the motion within the region of interest 2 based on the determined tracking feature in the temporal MIT image. The temporal MIT image comprises a time series of MIT images of the region of interest 2.

The MIT reconstruction unit 8 is preferentially adapted to use known reconstruction algorithms, for example, the reconstruction algorithm disclosed in the article "Solution of the inverse problem of magnetic induction tomography (MIT)", Robert Merwa et al., Physiological Measurement, 26 (2005) S241-S250, which is herewith incorporated by reference.

The tracking feature can be a landmark of maximum impedance contrast in the temporal MIT image. In this embodiment, the region of interest 2 is located within a person 9, in particular, a patient, and the motion to be monitored is caused by breathing. The tracking feature is therefore preferentially the diaphragmatic position within the person 9. The region of interest can also cover the whole person or a part of the person like a cross section of the person.

The motion determination unit 4 is preferentially adapted to detect the size, shape, position and/or orientation of tracking feature in the MIT images belonging to different times, i.e. to detect the tracking feature in the temporal MIT image, and to determine the motion within the region of interest 2 based on the detected size, shape, position and/or orientation of the tracking feature at different times.

The motion determination unit 4 can be adapted to determine the motion within the region of interest 2 by using one or several tracking features.

For determining the motion within the region of interest 2 the motion monitoring system 1 further comprises a motion model providing unit 10 for providing a motion model of the object to be reconstructed and of the motion to be determined. The motion model describes the motion of structures of the object within the region of interest 2, i.e. the size, shape, position and/or orientation of structures of the object at different times. The motion model is, for example, a motion model of the lung, the heart, or another organ of a person. Preferentially, the motion model describes at least the motion of the one or several tracking features.

The motion determining unit 4 is configured to adapt the motion model to the temporal MIT image. The motion model is preferentially modified such that deviations of the motion model from the motion of the object comprised by the temporal MIT image are minimized. In particular, the motion model is preferentially adapted such that the motion of the tracking features identified in the temporal MIT image corresponds to the motion of the tracking features described by the adapted motion model.

The adapted motion model can be regarded as the determined motion within the region of interest 2.

The motion model describes the movement of structures of an object like the thorax or the heart. In particular, the motion model describes the motion of the tracked tracking features, i.e. for example the motion of the shape of the cardiac ventricle or of the size of the ventricular blood volume. Known motion models can be used like the motion models disclosed in "Respiratory motion in coronary magnetic resonance angiography: a comparison of different motion models", Manke D., Nehrke K., Börnert P., Rösch P., Dössel O., Journal of Magnetic Resonance Imaging, 2002 Jun, 15(6): 661-71, which is herewith incorporated by reference.

As already mentioned above, the MIT detection data acquisition unit 3 is adapted to perform a sequential procedure, wherein different measurements are performed using different transmitting coils 5, which are arranged around the region of interest 2, one after the other in a given sequence. The MIT reconstruction unit 8 can be adapted to reconstruct a MIT image after one cycle of using the transmitting coils 5 has been completed, i.e. cycle after cycle can be performed, wherein after each completion of a cycle the acquired MIT detection data of the just completed cycle are used for reconstructing an actual MIT image. The MIT images reconstructed for different cycles form the time series of MIT images, i.e. the temporal MIT image. However, in this embodiment the MIT reconstruction unit 8 is adapted to use sliding window techniques for reconstructing the temporal image of the region of interest. From the last acquired MIT detection data as much MIT detection data are used for reconstruction an actual MIT image as needed for reconstructing this image with the desired quality, i.e., for example, with the desired spatial resolution. This allows reconstructing the MIT images online during a cycle, i.e. before a cycle has been completed, and increases the temporal resolution of the temporal image and, thus, the monitored motion. Preferentially, the last MIT detection data covering a range of activated transmitting coils 5 of 360° are used for reconstructing the actual MIT image. To this goal, the order of activating the different MIT transmitting coils is preferentially given by the golden cut, yielding equidistant activation patterns for arbitrary data subset sizes.

The monitored motion, i.e. the extracted motion information, can be used for reducing motion artifacts in images of the region of interest generated by a MIT imaging modality or another modality like a MR imaging system or a nuclear imaging system, for example, a PET imaging system or a SPECT imaging system.

In this embodiment, the motion monitoring system 1 further comprises a motion correction unit 11 for correcting motion artifacts in an image of the region of interest based on the determined motion. The motion correction unit 11 is preferentially adapted to correct respiratory motion artifacts. However, the motion correction unit 11 can also be adapted to correct other motion artifacts like gastrointestinal motion artifacts and/or cardiac motion artifacts. Preferred motion corrections will be explained further below.

The motion monitoring system 1 further comprises a user interface 36 enabling an operator, for example, to start a motion monitoring procedure. The user interface 36 can further be adapted to display the determined motion in the region of interest 2.

The motion monitoring system 1, in particular, the MIT detection data acquisition unit 3, can relatively easily be integrated in many other imaging modalities like MR, PET or SPECT imaging modalities, i.e. existing imaging modalities can easily be modified to integrate the motion monitoring system which uses the MIT detection data acquisition unit.

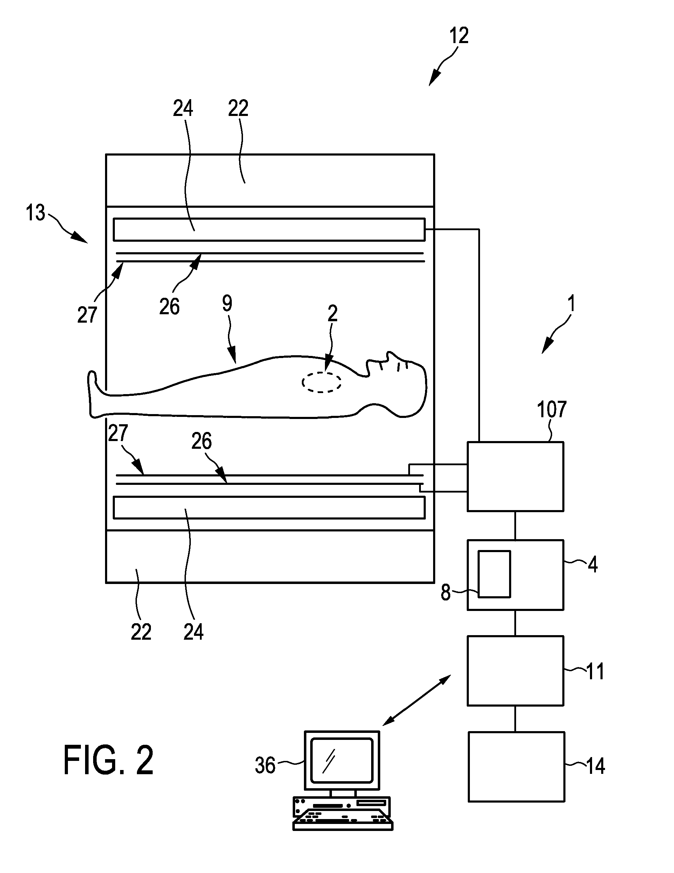

In the following an imaging system 12 for imaging a region of interest 2 will schematically and exemplarily be described with reference to Fig. 2. Similar elements in Fig. 1 and Fig. 2 are indicated by similar reference signs.

The imaging system 12 comprises the motion monitoring system 1 and an imaging unit 13 for generating an image of the region of interest 2. The motion correction unit of the motion monitoring system 1 is adapted to correct motion artifacts in the generated image of the region of interest 2 based on the determined motion.

The imaging unit 13 is a magnetic resonance imaging unit. The magnetic resonance imaging unit 13 includes a main field magnet 22 for generating a B0 field in the region of interest 2. Gradient coils 24 induce a gradient magnetic field across the B0 field, typically along three orthogonal axes. MR transmitting coils 26 being RF coils transmit RF pulses to excite and manipulate resonance in the region of interest 2 within the person 9. The transmitting coils 26 optionally also receive RF resonance signals from the region of interest 2. Receiving coils 27 also being RF coils receives the resonance signals. Optionally, the receiving coils 27 can also induce and manipulate resonance. A MR detection data generation unit 107 controls the gradient coils 24, the transmitting coils 26 and the receiving coils 27, in particular, based on a MR imaging sequence being selectable by, for example, an operator or an automated sequence selection unit, and generates MR detection data based on the received resonance signals.

The main field magnet 22, the gradient coils 24, the transmitting coils 26, the receiving coils 27 and the MR detection data generation unit 107 can be regarded as elements of a MR detection data acquisition unit.

The MIT detection data acquisition unit and the MR detection data acquisition unit 13 are integrated, i.e. in this embodiment the MR transmitting coils 26 are the MIT transmitting coils 5. Moreover, the MR receiving coils 27 are the MIT receiving coils 6. The MR detection data generation unit 107 is an integrated unit including the MIT detection data generation unit 7 and being adapted for generating both, MIT detection data and MR detection data.

In other embodiments, the MIT transmitting coils and the MIT receiving coils are separated from the MR transmitting coils and the MR receiving coils. Also, the MIT detection data generation unit 7 can be separated from the MR detection data generation unit 107. The approach to use separate MR coils and MIT coils has the advantage that a frequency can be chosen which (a) is optimal for decoupling MR and MIT coils and (b) yields optimal MIT image contrast, i.e., a frequency, which is significantly lower than typical Larmor frequencies.

The MIT reconstruction unit 8 of the motion determining unit 4 reconstructs a temporal MIT image from the acquired MIT detection data, and the motion determining unit 4 determines the motion within in the region of interest 2 based on the reconstructed temporal MIT image preferentially as described above with reference to Fig. 1.

The motion correction unit 11 is adapted to reconstruct the received MR resonance signals into a MR image. Thus, also concerning the motion correction unit 11 the motion monitoring system and the imaging unit are preferentially integrated, wherein the motion correction unit 11 receives the monitored motion from the motion determining unit 4 and considers the received motion while reconstructing the MR image. This allows for a compact imaging system comprising the motion monitoring system. In another embodiment, the imaging unit can comprise a separate reconstruction unit for reconstructing a MR image of the region of interest 2 from the acquired MR detection data, and the motion correction unit 11 can be adapted to correct the reconstructed MR image based on the determined motion.

In this embodiment, the monitored motion within the region of interest 2 is a periodic motion like respiratory motion or cardiac motion. The motion correction unit 11 is preferentially adapted to consider only MR detection data during reconstruction, which correspond to the same motion phase. This same motion phase is preferentially selected such that in this motion phase the motion velocity is zero or significantly smaller than in other motion phases, for example, the end-diastolic cardiac phase is selected if a heart is to be imaged. This allows reducing motion artifacts in the reconstructed MR image. In other embodiments, the monitored motion can be used in another way while reconstructing the MR image. For example, a motion phase can be selected where a suitably specified anatomic landmark lies within certain geometric limits. The geometric limits are, for example, an upper and lower bound of the diaphragm.

The imaging system 12 further comprises a user interface 36 that enables, for example, an operator to select imaging sequences to be performed, reconstruction operations, image formats and the like and displays at least the reconstructed MR image.

The imaging system 12 preferentially further comprises an overlay unit 14 for overlaying the reconstructed MIT image and the reconstructed MR image. The user interface 36 is preferentially also adapted to display the overlay image.

The transmitting coils 5 can be adapted such that they can transmit and receive MR signals and transmit MIT signals. Moreover, the receiving coils 6 can be adapted to receive MR signals and MIT signals from the region of interest 2. In another embodiment, the transmitting coils 5 can be adapted to transmit and receive MR signals and to transmit and receive MIT signals, and the receiving coils 6 can be adapted to receive MR signals and to transmit and receive MIT signals.

In the imaging system 12 described above with reference to Fig. 2 the MR receiving coils 27 are preferentially used as pick-up coils to monitor the proper functioning of the transmit channels of the MR imaging system 12.

In other embodiments, the imaging unit can also be another imaging modality like a nuclear imaging unit, for example, a PET imaging unit or a SPECT imaging unit, an X-ray imaging unit, for example, an X-ray computed tomography imaging unit or an X-ray C-arm imaging unit, an ultrasound imaging unit et cetera.

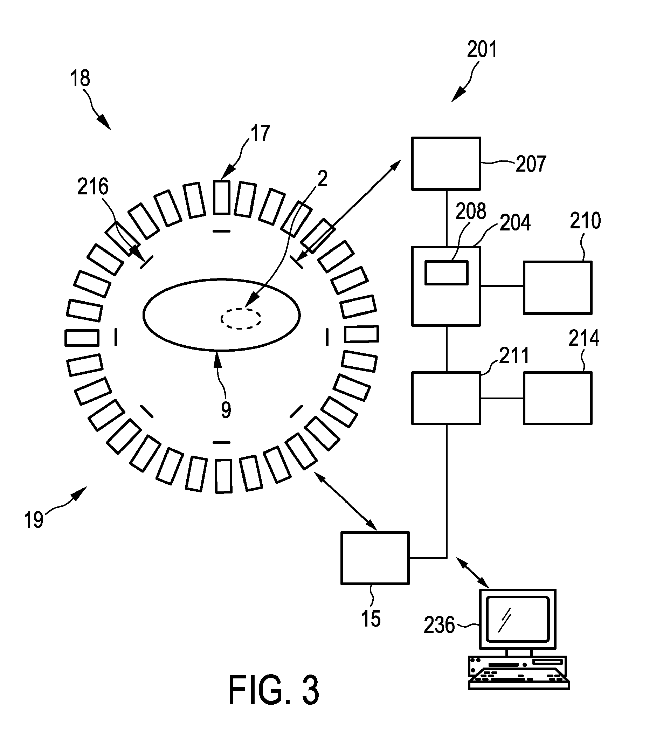

In the following a PET imaging system comprising the motion monitoring system will exemplarily and schematically be described with reference to Fig. 3. In Figs. 1 and 3 similar elements are indicated by similar reference signs.

The imaging system 18 comprises a motion monitoring system 201 and an imaging unit 19 for generating an image of the region of interest 2. A motion correction unit 211 of the motion monitoring system 201 is adapted to correct motion artifacts in the generated image of the region of interest 2 based on the determined motion.

The imaging unit 19 is a PET imaging unit. The PET imaging unit comprises detection elements 17 surrounding an examination zone in which a region of interest 2 within a person 9 is present. The detection elements 17 detect pairs of gamma rays emitted indirectly by a positron-emitting radionuclide being present within the person 9. A pair of gamma race is defined by coinciding detection events in opposite detector elements 17 being separated by an angle of about 180 degrees. A PET detection data acquisition unit 15 generates PET detection data based on the detected pairs of gamma rays. The motion monitoring system 201 of the imaging system 18 comprises MIT receiving and transmitting coils 216 which also surround the region of interest 2. In this embodiment, the MIT transmitting and receiving coils 216 are adapted to transmit and receive MIT signals. In other embodiments, separate MIT transmitting coils and MIT receiving coils, for example, corresponding to the transmitting and receiving coils 5 and 6 described above with reference to Fig. 1, can be arranged around the region of interest 2.

The motion monitoring system 201 further comprises a MIT detection data generation unit 207 for generating MIT detection data based on voltage changes measured in the MIT transmitting and receiving coils 216. The motion monitoring system 201 further comprises a motion determining unit 204 comprising a reconstruction unit 208 and a motion model providing unit 210. These units are similar to the motion determining unit 4, reconstruction unit 8 and motion model providing unit 10 described above with reference to Fig. 1.

The imaging system 18 further comprises a motion correction unit 211 which can be regarded as being a part of the motion monitoring system 201 and the imaging unit 19.

The motion correction unit 211 is adapted to consider the determined motion within the region of interest 2 while reconstructing a PET image based on the acquired PET detection data. The PET reconstruction method is preferentially based on the maximum- likelihood expectation-maximization (ML-EM) algorithm. During the processes of forward- and backward-projection in the ML-EM iterations, all projection data acquired at different motion phases can be combined together to update the emission map with the aid of the motion model. This well known reconstruction method is disclosed in, for example, "Model-based image reconstruction for four-dimensional PET", Li T., Thorndyke B., Schreibmann E., Yang Y., Xing L., Med. Phys., 2006 May, 33(5):1288-98 which is herewith incorporated by reference. In other embodiments, other PET reconstruction methods which incorporate the determined motion can be used.

Also the imaging system 18 shown in Fig. 3 preferentially comprises a user interface 236 for enabling, for example, an operator to define and initiate a motion monitoring procedure and an imaging procedure. Also the user interface 236 is preferentially adapted to display, for example, the PET image, the determined motion and preferentially also the reconstructed MIT image.

The imaging system 18 further comprises an overlay unit 214 for overlaying the reconstructed MIT image and the reconstructed PET image. The user interface 236 is preferentially also adapted to display the overlay image.

The MIT transmitting and receiving coils 216 are approximately transparent to gamma rays.

The transmitting and receiving coils 216 are arranged within the arrangement of detector elements 17 for detecting gamma rays. This ensures a minor influence or no influence of the detector elements 17 on the MIT detection data.

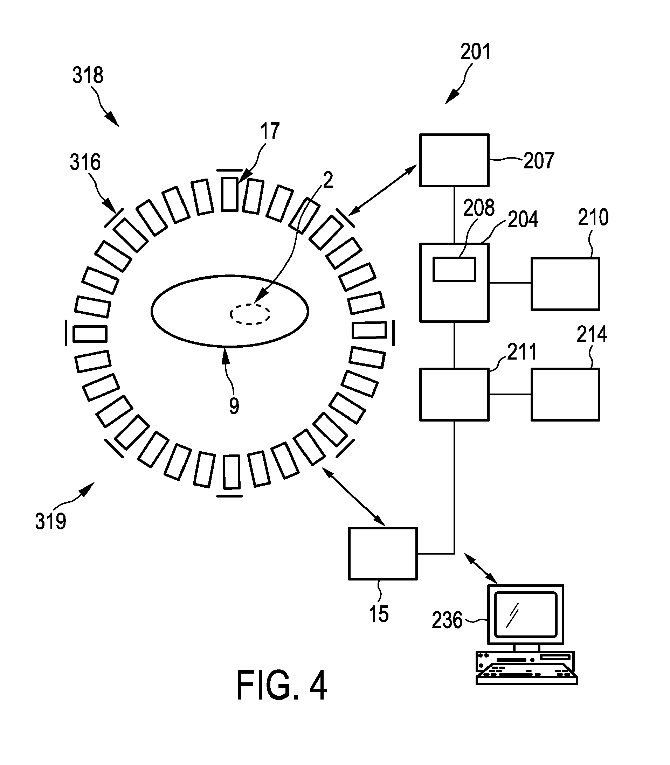

Fig. 4 shows schematically and exemplarily a further embodiment of an imaging system 318 comprising an imaging unit 319 being a PET imaging unit and the motion monitoring system 201. In Figs. 3 and 4 similar elements are indicated by similar reference signs.

The imaging system 318 shown in Fig. 4 differs from the imaging system 18 shown in Fig. 3 by the arrangement of the MIT transmitting and receiving coils 316. The MIT transmitting and receiving coils 316 are located outside of the arrangement of detection elements 17. Therefore, the MIT transmitting and receiving coils do not need to be transparent for gamma rays.

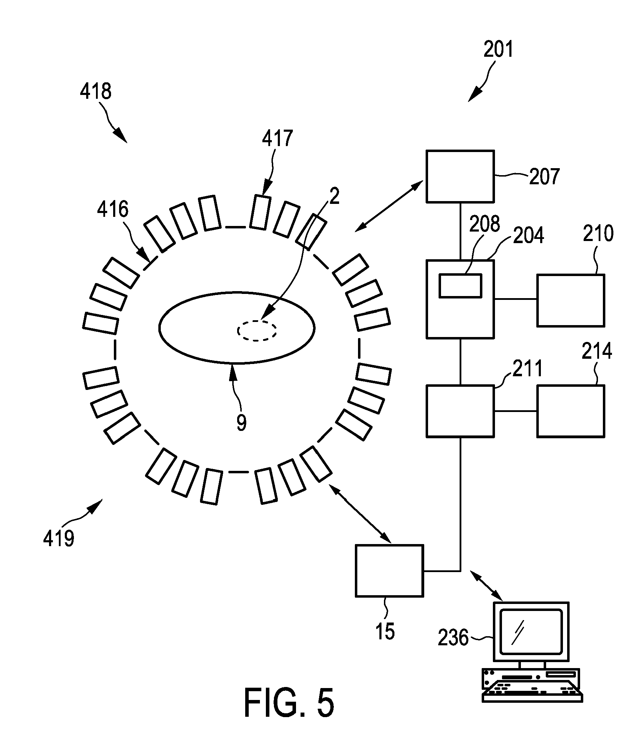

Fig. 5 shows schematically and exemplarily a further embodiment of an imaging system 419 comprising the motion monitoring system 201 and an imaging unit 418 being a PET imaging unit. In Fig. 5 and Fig. 3 similar elements are indicated by similar reference signs.

In Fig. 5, the arrangement of detection elements 417 for detecting gamma rays is interleaved with the MIT transmitting and receiving coils 416. Thus, an interleaved arrangement of detection element 417 and MIT transmitting and receiving coils 416 surrounds the region of interest 2. Also in this embodiment the MIT transmitting and receiving coils 416 do not need to be transparent for gamma rays. Moreover, the detection elements 417 only have a minor influence or no influence on the MIT detection data.

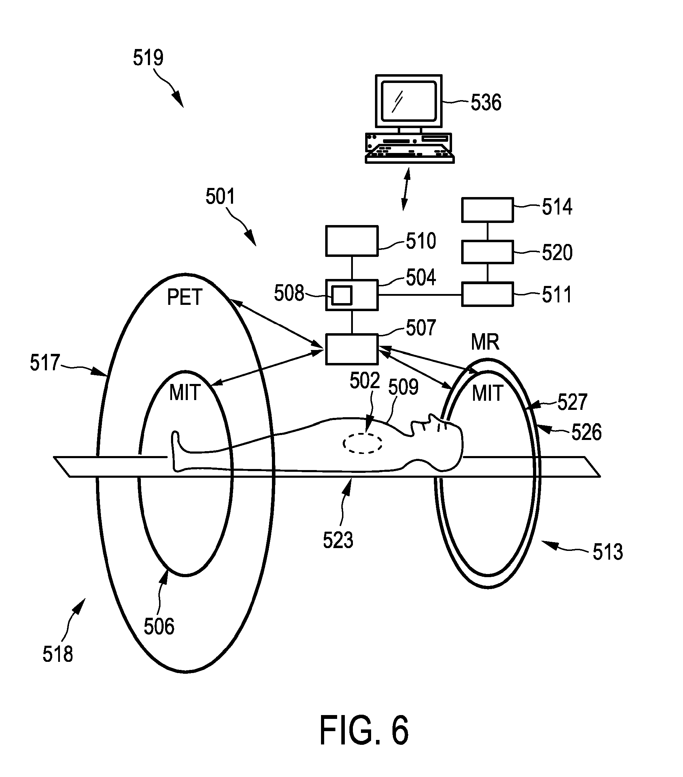

Fig. 6 shows schematically and exemplarily an in-light hybrid imaging system 519 having a first imaging unit being a MR imaging unit 513 and a second imaging unit being a PET imaging unit 518. The two imaging units 513, 518 surround the same patient table 523 on which a person 509 is lying. By moving the patient table 523 the person 509 can be moved from the first imaging unit 513 to the second imaging unit 518 or vice versa. Therefore, the same region of interest 502 within the person 509 can be imaged by the first imaging unit 513 and the second imaging unit 518. The in-line hybrid imaging system 519 is combined with a motion monitoring system 501 for monitoring motion within the region of interest 502.

The MR imaging unit 513 comprises a MR data acquisition ring indicated by a circle 526 in Fig. 6. The MR imaging unit 513 can, for example, correspond to the MR imaging unit 13 described above with reference to Fig. 2. The MR imaging unit 513 comprises transmitting and receiving coils for generating MR signals. A detection data generation unit 507 generates MR detection data based on the received MR signals. The MR transmitting and receiving coils or separate MIT transmitting and receiving coils are used for generating MIT signals within the MR imaging unit. The MIT transmitting and receiving coils are indicated in Fig. 6 by a circle 527. The detection data generation unit 507 generates first MIT detection data based on the MIT signals received from inside the first imaging unit 513.

The PET imaging unit 518 comprises a ring of detection elements 517 for detecting pairs of gamma rays. The pairs of gamma rays are used by the detection data generation unit 507 to generate PET detection data. Also in the PET imaging unit 518 MIT transmitting and receiving coils are integrated which are indicated in Fig. 6 by a circle 506. MIT signals generated within the second imaging unit 518 are used for generating second MIT detection data by the detection data generating unit 507. Thus, the person 509 with the region of interest 502 is located within the first imaging unit 513 for generating MR detection data and first MIT detection data, then the patient table 523 is moved such that the person 509 with the region of interest 502 is located within the second imaging unit 518 for generating PET detection data and second MIT detection data.

The first MIT detection data are provided to a motion determining unit 504 which comprises a reconstruction unit 508. The reconstruction unit 508 reconstructs a temporal first MIT image from the first MIT detection data and the motion determining unit 504 determines the motion within the first imaging unit 513 based on the reconstructed first temporal MIT image by using a motion model provided by the motion model providing unit 510. Similarly, a second temporal MIT image is reconstructed from the second MIT detection data and the motion within the second imaging unit 518 is determined based on the second temporal MIT image and the provided motion model.

A motion correction unit 511 is adapted to reconstruct a MR image from the generated MR detection data under consideration of the motion determined within the first imaging unit 513 and to reconstruct a PET image from the PET detection data under consideration of the motion determined within the second imaging unit 518.

The imaging system 519 further comprises an aligning unit 520 for aligning the MR image and the first MIT image, the PET image and the second MIT image, and the MR image and the PET image with respect to each other. The aligning unit 520 is adapted to determine a first spatial relationship between the MR image and the first MIT image based on the known relationship between the acquisition geometry defined by the MR transmitting and receiving coils and a first MIT acquisition geometry defined by the MIT transmitting and receiving coils of the first imaging unit 513. The aligning unit 520 is further adapted to determine a second spatial relationship between the PET image and the second MIT image based on the known relationship between the acquisition geometry defined by the detection elements of the PET imaging unit and a second MIT acquisition geometry defined by the MIT transmitting and receiving coils of the second imaging unit 518. The aligning unit 520 is preferentially adapted to align the first MIT image and the second MIT image with respect to each other by detecting similar features in the first MIT image and in the second MIT image and to align the MR image and the PET image with respect to each other by using the aligned first and second MIT images and the determined first and second spatial relationships. Thus, the aligning unit 520 is preferentially adapted to register the first and second MIT images, the MR image and the PET image with respect to each other.

The imaging system 519 further comprises an overlay unit 514 for generating an overlay image by overlaying the aligned images. Preferentially, at least one of a first overlay image being an overlay of the first MIT image and the MR image, a second overlay image being an overlay of the second MIT image and the PET image, a third overlay image being an overlay of the MR image and the PET image, and a fourth overlay image being an overlay of the MR image, the PET image and the first and/or the second MIT image, is generated.

The imaging system 519 further comprises a user interface 536 for allowing, for example, an operator to select desired acquisition, motion monitoring and reconstruction parameters. The user interface 536 is preferentially adapted to display the above mentioned overlay images and/or the MR image, the first and second MIT images, and the PET image. The images can also be displayed on a separate display unit.

The MIT transmitting and receiving coils in the first imaging unit 513 and in the second imaging unit 518 are preferentially arranged in the same way.

In Fig. 6 the detector elements 517 of the PET imaging unit 518 form a PET acquisition ring and the MIT transmitting and receiving coils 506 in the PET imaging unit form a second MIT acquisition ring. In Fig. 6, the second MIT acquisition ring is located within the PET acquisition ring. However, in other embodiments the MIT acquisition ring can also be arranged outside of the PET acquisition ring or the PET acquisition ring and the second MIT acquisition ring can be interleaved, for example, as schematically and exemplarily shown in Fig. 5.

The motion determination unit 508 can be configured to adapt the motion model with respect the first temporal MIT image reconstructed from the first MIT detection data. The aligning unit can then be adapted to align the first temporal MIT image and the second temporal MIT image, with respect to each other for aligning the adapted motion model with the second MIT image. The motion correction unit is then preferentially adapted to reconstruct the PET image from the PET detection data based on the aligned adapted motion model and the spatial relationship between the second MIT image, i.e. the aligned adapted motion model, and the PET image to be reconstructed. This allows using the motion model adapted by using the first temporal MIT image for reconstructing the PET image. Similarly, the second MIT image can be used to adapt the motion model and the motion model adapted by using the second temporal MIT image can be used for reconstructing the MR image.

The MIT transmitting and receiving coils 506, 527, the detection data generation unit 507, the motion determining unit 508, and the motion correction unit 511 form a motion monitoring system 501 being integrated with the MR imaging unit 513 and the PET imaging unit 518.

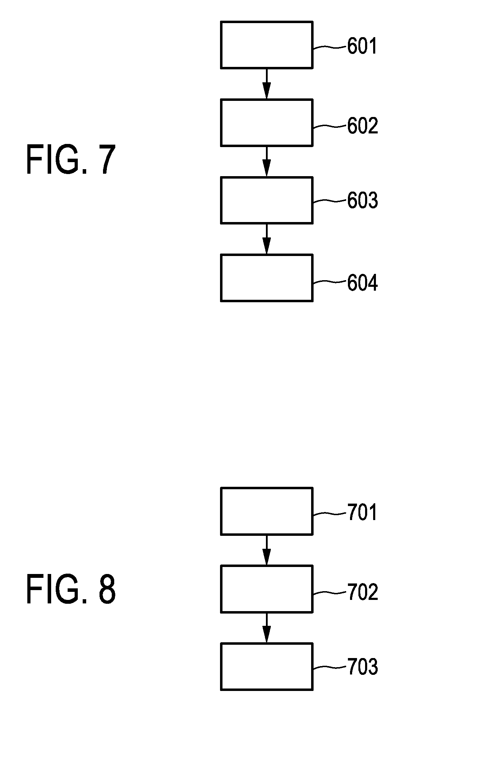

In the following a motion monitoring method for monitoring motion within a region of interest will exemplarily be described with reference to a flowchart shown in Fig. 7.

In step 601, MIT detection data of the region of interest are acquired by a MIT detection data acquisition unit. In step 602, a temporal MIT image is reconstructed from the acquired MIT detection data. The temporal MIT image comprises time series of MIT images of the region of interest. In step 603, a tracking feature is determined in the temporal MIT image. Preferentially, the position and/or orientation of the tracking feature is determined in MIT images which belong to different times and which form the temporal MIT image. In step 604, a provided motion model is adapted to the temporal MIT image. In particular, the motion model is adapted such that the motion of the tracking feature identified in the temporal MIT image, i.e. in this embodiment the modification of the position and/or orientation of the tracking feature with time, corresponds to the motion of the tracking features described by the adapted motion model, i.e. the motion model describes a motion of the tracking feature and the motion model is adapted such that the motion of the tracking feature described by the adapted motion model corresponds to the motion of the tracking feature within the temporal MIT image. The adapted motion model is preferentially the determined motion within the region of interest.

The adaptation of the motion model can include super-inferior translation, 3D translation or 3D affine transformation as disclosed in, for example, "Respiratory motion in coronary magnetic resonance angiography: a comparison of different motion models", Manke D., Nehrke K., Börnert P., Rösch P., Dössel O.., Journal of Magnetic Resonance Imaging. 2002 Jun;15(6):661-71.

In the following an imaging method for imaging a region of interest will exemplarily be described with reference to a flowchart shown in Fig. 8.

In step 701, motion is monitored within the region of interest by using MIT detection data as described above. In step 702, MR detection data are acquired and in step 703 an MR image is reconstructed using the acquired MR detection data and the determined motion. In another embodiment, instead or in addition to acquiring MR detection data and reconstructing an MR image, detection data and images of another modality can be acquired and reconstructed, respectively. For example, PET detection data can be acquired and a PET image can be generated under consideration of the determined motion.

The MIT systems described above comprise preferentially an array of transmitting and receiving coils for transmitting an RF signal via one element of the array and for receiving a MIT signal by the remaining elements. The transmitting and receiving coils form therefore preferentially an array antenna. The MIT image reconstruction uses preferentially the MIT detection data obtained from all transmit/receive configurations. The basic hardware necessary to perform MIT is similar to the basic hardware which can be used in a MR imaging system. This allows to perform both modalities simultaneously in an MR imaging system to gain new information or to support MR imaging by using MIT as an independent spatially resolved motion sensor.

Adding new information delivered by MIT to a MR measurement increases the diagnostic information gained from MR. An improved image quality can be achieved by means of a detection and correction of respiratory motion or other types of motion. The above described MR imaging systems with the integrated motion monitoring system can allow acquiring the motion information simultaneously with acquiring the MR detection data, thereby increasing the MR scan efficiency and maintaining a stable steady-state MR signal while acquiring the motion information. The above described hybrid MR configuration, i.e. the in-line PET-MR imaging system, allows to track motion in the PET imaging unit and in the MR imaging unit. This tracking is preferentially performed without interrupting the acquisition of the PET detection data and of the MR detection data and has preferentially no influence on the quality of the PET image and the MR image. The motion monitoring system preferentially allows to provide modality-independent motion information with sufficient spatial resolution.

If a MR imaging unit and a MIT imaging unit of a motion monitoring system are integrated, the MR imaging unit and the MIT imaging unit can have different signal detection chains. However, it is also possible that the MR imaging unit and the MIT imaging unit use the same signal detection chains.

In the above described PET-MR hybrid imaging system the MIT geometry used in the MR imaging unit and the MIT geometry used in the PET imaging unit are preferentially the same. However, in another embodiment these two MIT geometries can also be different.

If a MIT imaging unit of a motion monitoring system is combined with a PET imaging unit or a SPECT imaging unit, the MIT imaging unit comprises preferentially thin conductors, for example, PCB based transmitting and receiving coils, a thin RF screen and electronics like tuning and matching electronics or like a preamplifier outside the PET ring or the SPECT ring, respectively. The PCB based transmitting and receiving coils absorb less gamma rays. The RF screen shields the MIT transmitting coils and is preferentially thinner than generally MR RF screens, in order to absorb less gamma rays.

It should be noted that the terms "transmitting coils" and "receiving coils" refer to any elements which allow to transmit and receive MIT and/or MR signals.

The motion monitoring system can be used for MR imaging units and also for other imaging modalities as stand alone modalities. All of these modalities can potentially benefit from extra information provided by MIT, in particular information about the current motion state. For hybrid systems, which are preferentially hybrid in-line systems, the integrated MIT unit in both modalities allows for cross-reference and the use of more sophisticated motion and correction approaches. For instance, the motion model can be trained under one modality and well correlated to the MIT detection geometry. Afterwards, it can be applied in the other modality steered by another MIT imaging unit provided in the other modality. This can offer improved image quality, for instance, in an in-line PET-MR configuration, both equipped with an MIT imaging unit.

Although Figs. 1 and 3 to 5 show certain numbers of MIT transmitting and receiving coils and/or MR transmitting and receiving coils, in other embodiments the motion monitoring system and/or the imaging system comprising the motion monitoring system can comprise another number of MIT transmitting and receiving coils and/or MR transmitting and receiving coils.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Functions fulfilled by different units like the generation of detection data, the reconstruction of images based on the detection data, the determination of motion within a region of interest, and the correction of motion artifacts in generated images, and performed by one or several units can be performed by any other number of units or devices. The control of the above described motion monitoring systems in accordance with the motion monitoring method and the control of the above described imaging systems in accordance with the imaging method can be implemented as program code means of a computer program and/or a dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

## Claims

1. A motion monitoring system for monitoring motion within a region of interest (2; 502), the motion monitoring system (1; 501) comprising:
- a magnetic induction tomography (MIT) detection data acquisition unit (3; 506, 527, 507) for acquiring MIT detection data of the region of interest (2; 502),
- a motion determining unit (4; 504) for determining motion within the region of interest (2; 502) based on the acquired MIT detection data.

2. The motion monitoring system as defined in claim 1, wherein the motion determining unit (4; 504) comprises a MIT reconstruction unit (8; 508) for reconstructing a temporal MIT image of the region of interest (2; 502) from the acquired MIT detection data, wherein the motion determining unit (4; 504) is adapted to determine a tracking feature in the temporal MIT image and to determine the motion within the region of interest (2; 502) based on the determined tracking feature in the temporal MIT image.

3. The motion monitoring system as defined in claim 1, wherein the motion monitoring system (1; 501) further comprises a motion correction unit (11; 511) for correcting motion artifacts in an image of the region of interest (2; 502) based on the determined motion.

4. An imaging system for imaging a region of interest, the imaging system (12; 519) comprising:
- a motion monitoring system (1; 501) as defined in claim 1,
- an imaging unit (13; 513) for generating an image of the region of interest (2; 502),
- a motion correction unit (11; 511) for correcting motion artifacts in the generated image of the region of interest (2) based on the determined motion.

5. The imaging system as defined in claim 4, wherein the imaging unit (13; 513) comprises a detection data acquisition unit (22, 24, 26, 27, 107; 526, 507) for acquiring detection data being indicative of a property within the region of interest (2), wherein the motion correction unit (11; 511) is adapted to reconstruct the image from the acquired detection data and to correct motion artifacts while reconstructing the image.

6. The imaging system as defined in claim 4, wherein the imaging unit (13; 513) is a magnetic resonance imaging unit.

7. The imaging system as defined in claim 4, wherein the MIT detection data acquisition unit and the imaging unit (13) are integrated.

8. The imaging system as defined in claim 4, wherein the imaging system (519) further comprises a second imaging unit (518) for generating a second image of the region of interest.

9. The imaging system as defined in claim 8, wherein the second imaging unit (518) comprises a second detection data acquisition unit (507, 517) for acquiring second detection data being indicative of a property within the region of interest (502), wherein the motion correction unit (511) is adapted to reconstruct the second image from the second detection data and to correct motion artifacts while reconstructing the second image.

10. The imaging system as defined in claim 9, wherein the imaging system comprises a first MIT detection data unit for acquiring first MIT detection data assigned to the imaging unit and a second MIT detection data acquisition unit for acquiring second MIT detection data assigned to the second imaging unit, wherein the motion determining unit is adapted to determine the motion within the imaging unit based on the acquired first MIT detection data and the motion within the second imaging unit based on the acquired second MIT detection data.

11. A motion monitoring method for monitoring motion within a region of interest (2; 502), the motion monitoring method comprising following steps:
- acquiring MIT detection data of the region of interest (2; 502) by a magnetic induction tomography (MIT) detection data acquisition unit (3; 506, 527, 507),
- determining motion within the region of interest (2; 502) based on the acquired MIT detection data by a motion determining unit (4; 504).

12. An imaging method for imaging a region of interest, the imaging method comprising following steps:
- monitoring motion within the region of interest (2; 502) as defined in claim 11,
- generating an image of the region of interest (2) by an imaging unit (13; 513), wherein motion artifacts in the generated image of the region of interest (2) are corrected based on the determined motion by a motion correction unit (11; 511).

13. A motion monitoring computer program for monitoring motion within a region of interest, the motion monitoring computer program comprising program code means for causing a motion monitoring system as defined in claim 1 to carry out the steps of the motion monitoring method as defined in claim 11, when the computer program is run on a computer controlling the motion monitoring system.

14. An imaging computer program for imaging a region of interest, the imaging computer program comprising program code means for causing an imaging system as defined in claim 4 to carry out the steps of the imaging method as defined in claim 12, when the computer program is run on a computer controlling the imaging system.
